# EUROPÄISCHE PATENTSCHRIFT

(11) **EP 3 775 767 B1**
(45) Veröffentlichungstag und Bekanntmachung des Hinweises auf die Patenterteilung: **05.07.2023**
(21) Anmeldenummer: 19719201.6
(22) Anmeldetag: 12.04.2019
(51) Int. Cl.: G01B 11/25, G01B 21/04

(54) **VERFAHREN UND SYSTEM ZUR VERMESSUNG EINES OBJEKTS MITTELS STEREOSKOPIE**
METHOD AND SYSTEM FOR MEASURING AN OBJECT BY MEANS OF STEREOSCOPY
PROCÉDÉ ET SYSTÈME DE MESURE D'UN OBJET PAR STÉRÉOSCOPIE

(30) Priorität: 13.04.2018 DE 102018108874
(43) Veröffentlichungstag der Anmeldung: 17.02.2021
(73) Patentinhaber: ISRA VISION AG, 64297 Darmstadt (DE)
(72) Erfinder: WIRTH, Holger, 63225 Langen (DE); NEUGEBAUER, Peter, 64347 Griesheim (DE); SCHOLZ, Manuel, 64295 Darmstadt (DE); ERSÜ, Enis, 64297 Darmstadt (DE)
(74) Vertreter: Keil & Schaafhausen Patentanwälte PartGmbB
(86) Internationale Anmeldenummer: PCT/EP2019/059521
(87) Internationale Veröffentlichungsnummer: WO 2019/197656

(56) Entgegenhaltungen:
- US-A1- 2016 070 991
- US-A1- 2017 034 499
- US-B1- 8 723 789
- US-B1- 9 521 399
- BASTIAN HARENDT ET AL: "3D shape measurement of static and moving objects with adaptive spatiotemporal correlation", APPLIED OPTICS, OPTICAL SOCIETY OF AMERICA, WASHINGTON, DC; US, Bd. 53, Nr. 31, 1. November 2014 (2014-11-01), Seiten 7507-7515, XP001592694, ISSN: 0003-6935, DOI: 10.1364/AO.53.007507 [gefunden am 2014-10-30]
- SCHREIBER W ET AL: "THEORY AND ARRANGEMENTS OF SELF-CALIBRATING WHOLE-BODY THREE-DIMENSIONAL MEASUREMENT SYSTEMS USING FRINGE PROJECTION TECHNIQUE", OPTICAL ENGINEERING, SOC. OF PHOTO-OPTICAL INSTRUMENTATION ENGINEERS, BELLINGHAM, Bd. 39, Nr. 1, 1. Januar 2000 (2000-01-01) , Seiten 159-169, XP001092868, ISSN: 0091-3286, DOI: 10.1117/1.602347
- MARCUS GROSSE: "Fast data acquisition for three-dimensional shape measurement using fixed-pattern projection and temporal coding", OPTICAL ENGINEERING., Bd. 50, Nr. 10, 11. Oktober 2011 (2011-10-11), Seite 100503, XP055396813, BELLINGHAM ISSN: 0091-3286, DOI: 10.1117/1.3646100
- SALVI J ET AL: "Pattern codification strategies in structured light systems", PATTERN RECOGNIT, ELSEVIER, GB, Bd. 37, Nr. 4, 1. April 2004 (2004-04-01), Seiten 827-849, XP004491495, ISSN: 0031-3203, DOI: 10.1016/J.PATCOG.2003.10.002

## Beschreibung

Die Erfindung betrifft ein Verfahren und ein System zur Vermessung von insbesondere dreidimensionalen Objekten mittels Stereoskopie mit einem Verfahren nach dem Oberbegriff des Anspruchs 1 und einer Vorrichtung nach dem Oberbegriff des Anspruchs 12, bei dem mittels eines Projektors ein Muster auf die Objektoberfläche projiziert wird und das als Szene bezeichnete auf die Objektoberfläche projizierte Muster mit mindestens drei Kameras aufgenommen wird.

Mittels einer Recheneinheit werden durch Bildverarbeitung in den durch die Kameras aufgenommenen Bildern Korrespondenzen der Szene aufgefunden und mittels der gefundenen Korrespondenzen eine Vermessung des Objekts durchgeführt. Dies erfolgt insbesondere durch Bestimmen der Koordinaten der gefundenen Korrespondenzen. Mit anderen Worten wird ein Vermessen der Objektoberfläche, die mit dem projizierten Muster beleuchtet ist, durchgeführt.

Für die dreidimensionale optische Vermessung von Objekten ist die sogenannte Stereoskopie ein bekanntes Verfahren. Dazu werden zwei Kameras benutzt, die in einem bestimmten Abstand zueinander montiert sind und in die zu vermessende Szene schauen. Es gibt passive Verfahren, die versuchen mit der natürlichen Beleuchtung oder zumindest einer unstrukturierten Beleuchtung auszukommen, und aktive Verfahren, die eine strukturierte Beleuchtung benutzen. Die strukturierte Beleuchtung wird benutzt, damit das schwierigste Problem beim Stereoverfahren, nämlich die robuste Auffindung von Korrespondenzen in den Bildern der verschiedenen Kameras, sicherer gelöst werden kann. Hier sind wiederum mehrere Verfahren bekannt, wobei alle letztendlich Bildpunkte in jeder Kamera auswerten.

Ein Beispiel für ein derartiges Verfahren ist aus der DE 10 2016 002 398 A1 bekannt, bei dem mehrere (unkodierte schmale) Lichtlinien auf das zu messende Objekt projiziert und die projizierten Linien mit einer Kamera erfasst werden. Weil es sich um unkodierte Linien handelt, ist mit steigender Linienzahl eine Indizierung der Linien schwierig bei einem großen Sichtwinkel zwischen der Kamera und dem Projektionswinkel der Linien. Ein großer Sichtwinkel (Triangulationswinkel) erlaubt aber eine genaue Bestimmung der Tiefe des Objekts am Messpunkt, wobei für die Vermessung des Objekts der Linienindex bekannt sein muss. Eine genaue Vermessung der Tiefe des Objekts mit gleichzeitig hoher Auflösung, d.h. einer hohen Dichte der projizierten Linien, ist systematisch nicht möglich. Es wird daher vorgeschlagen, eine Messung mit zwei Kameras mit verschieden großen Triangulationswinkeln zu der optischen Achse der Linienprojektion durchzuführen, die zeitgleich dieselben Bildpunkte aufnehmen, eine erste Kamera mit einem kleinen und eine zweite Kamera mit einem großen Triangulationswinkel. Die Kamera mit kleinem Triangulationswinkel erlaubt eine sehr genaue Indizierung der projizierten Linien bei einer großen Messunsicherheit des Abstands respektive der Tiefe des Objekts. Die Kamera mit großen Triangulationswinkel erlaubt eine genau Tiefenbestimmung mit kleinen Triangulationswinkel, aber keine präzise Indizierung der in einem dichten Linienmuster prozierten Linien, so dass diese Daten nicht eindeutig auswertbar sind. Zur Kopplung der Daten wird eine Rückprojektion der einzelnen Daten der Triangulationssensoren vorgeschlagen, bei dem aus den Daten der Kamera mit kleinem Triangulationssensor zunächst ein erstes Modell des Objekts rekonstruiert wird, das zwei eine große Messuntersicherheit bezüglich der tatsächlichen Tiefe, aber eine genaue Lokalisierung der projizierten Line erlaubt. Die 3D-Punkte des ersten Modells werden nun numerisch mit der aus der Triangulationsmessung der ersten Kamera gewonnenen Indizierung in das Kamerabild der zweiten Kamera mit großem Triangulationssensor rückprojiziert. Die so gewonnen Punkte besitzen zwar ein großes Rauschen, aber eine korrekte Indizierung. So soll eine genaue Zuordnung der Indizes der Linien zu der genaueren Tiefenmessung mit der Triangulationsmessung der zweiten Kamera möglich sein. Die Rückprojektion ist jedoch aufwendig und störanfällig, da die Genauigkeit bei der Zuordnung der Indizes zu den Messpunkten in der Rückprojektion je nach konkreter Form des zu vermessenden Objekts nicht unbedingt eindeutig ist.

Aus der DE 10 2011 121 969 A1 ist ein Verfahren zur Vermessung von tiefenlimitierten Objekten bekannt, bei dem ein zeitlich veränderliches Muster auf ein Objekt projiziert und mit zwei kalibrierten Kameras eines Stereosystems aufgenommen wird, wobei nach der Methode der Zeitkorrelation homologe Punkte einander zugeordnet werden. Dies erfolgt durch eine pixelweise Ähnlichkeitsanalyse der zeitlichen Grauwertverläufe der einzelnen Pixel. Die 3D-Messung ist dabei auf tiefenlimitierte Objekte beschränkt, d.h. Objekte, deren Formabweichung zu einem Referenzobjekt begrenzt ist und bei dem die Suche der Korrespondenzzuordnung in einem angepassten Suchfeld stattfindet. Diese Beschränkung ist notwendig, um die zeitlichen Grauwertverläufe auch weniger Bildsequenzen zuverlässig miteinander zu korrelieren.

Aus dem Artikel Bastian Harendt et.al.: "3D shape measurement of static and moving objects adaptive spaciotemporal correlation", Applied Optics, optical Society of America, Washington DC, US, Bd. 53, Nr. 31, 1. November 2014, Seiten 7507-7515. ISSN: 0003-6935 ist ein Verfahren nach Anspruch 1 und aus der US 9,521,399 B1 sind ein Verfahren nach Oberbegriff das Anspruchs 1 und ein System dem Oberbegriff des Anspruchs 12 bekannt.

In der US 8,723,789 B1 wird ein System zur Benutzerinteraktion mit einer Anzeige mit mindestens zwei, insbesondere drei Kameras beschrieben, Jede Kamera erfasst im Wesentlichen gleichzeitig zweidimensionale Bilder des Benutzers von ihrem Standpunkt aus. Getrennt und gemeinsam werden die Bilddaten analysiert, um darin relativ wenige Orientierungspunkte zu identifizieren, die für den Benutzer definierbar sind.

Die US 2016/070991 A1 und der Artikel Marcus Grosse: "Fast data acquisition of three dimensional shape measurement using fixed-pattern projection and temporal coding, Optical Engineering, Bd. 50, Nr. 10, 1. Oktober 2011, Seite 100503, ISSN: 0091-3286 beschreiben optische System aus dem technischen Umfeld.

Aufgabe der Erfindung ist es, ein solches Verfahren und System dahingehend weiter zu entwickeln, dass die Vermessung der Objekte robuster und weniger störanfällig ist. Die erfindungsgemäß vorgeschlagenen Verfahren und System sind insbesondere zur Verwendung in industriellen Umgebungen vorgesehen, insbesondere bei der Fertigung oder Montage dreidimensionaler Objekte.

Bei dem erfindungsgemäß vorgeschlagenen Verfahren gemäß Anspruch 1 ist insbesondere vorgesehen, dass die Kameras intrinsisch und extrinsisch kalibriert sind. Bei der Musterprojektion wird eine flächige Kodierung und eine zeitliche Kodierung erzeugt, indem zum einen
- ein (vollständig) flächig kodiertes Muster projiziert und die Szene mit den Kameras vorzugsweise zeitgleich getriggert aufgenommen wird, und
- ein zeitlich kodiertes Muster mit flächig unterschiedlicher Kodierung mehrfach nacheinander projiziert und mehrere Szenen nacheinander mit den Kameras jeweils zeitgleich getriggert aufgenommen werden.

Bei der flächigen Kodierung werden für die Szene Korrespondenzen benachbarter Bildpunkte in den durch die verschiedenen Kameras aufgenommen Bildern gefunden. Ferner werden bei der zeitlichen Kodierung für die mehreren Szenen in jeweils denselben Bildpunkten der durch die verschiedenen Kameras aufgenommenen Bilder Korrespondenzen gefunden. Für jeden Bildpunkt werden gefundene Korrespondenzen in der flächigen Kodierung und in der zeitlichen Kodierung korreliert, und diese Korrelationen werden bei der Vermessung des Objekts verwendet. Die Verwendung kann bspw. in einer Mittelung verschiedener Koordinatenpunktberechnungen, einer Überprüfung auf Abweichung und Bewertung mittels zulässiger Toleranzen, einem Verwerfen einzelner Bildpunkte oder dgl. bestehen.

Unter einem vollständig flächig kodierten Muster wird verstanden, dass das Muster zumindest in dem gesamten interessierenden Projektionsbereich, der der auf dem Objekt (bzw. genauer der Oberfläche des Objekts) durch die Projektion dargestellte Ausschnitt des Musters ist, kodiert ist. Grundsätzlich wird bei einer flächigen Kodierung ein Muster projiziert, das eine zweidimensionale Kodierung realisiert, d.h. dass ein Musterpunkt im Kontext des Gesamtmusters oder zumindest einer gewissen Musterumgebung um diesen Musterpunkt eindeutig identifizierbar ist. Als besonders vorteilhaft haben sich hier zweidimensionale Pseudo-Zufallsmuster erwiesen, deren Auflösung so gewählt ist, dass die Kameras die einzelnen Musterpunkte gerade noch sicher auflösen können, d.h. dass die Auflösung der Pixel der Kamera höher ist als die einzelnen Musterpunkte. Mit anderen Worten sind die Pixel der Kamera, auf denen das Muster abgebildet wird, kleiner als die Musterpunkte des in den Pixeln der Kamera abgebildeten Musters. Ein Musterpunkt wird also durch mehrere, vorzugsweise in zwei Dimensionen nebeneinander liegende Pixel der Kamera und des Kamerabildes beschrieben. Wie hoch die Auflösung der Musterpunkte sein muss, damit die Bildverarbeitung die einzelnen Musterpunkte sicher auffinden (d.h. auflösen) kann, hängt von den jeweiligen optischen Gegebenheiten ab und wird ggf. durch den Fachmann bei der Einrichtung des Systems durch theoretische Überlegungen und/oder Versuche ermittelt und entsprechend eingestellt. Grundsätzlich ist es je nach Anwendungsfall möglich, dass ein Musterpunkt in etwa in nur einem Kamerapixel abgebildet wird. Häufig wird es aber sinnvoll sein, wenn eine Musterpunkt eine flächige Anordnung mehrerer Kamerapixel umfasst.

Der Vorteil dieser räumlich bzw. flächig kodierten Muster ist, dass sie mit einem einzigen Bild in jeder Kamera auskommen. Der Nachteil ist jedoch, dass sie für jeden Musterpunkt Nachbarschaftsinformation benötigen. Es muss also in der Umgebung jedes Musterpunkts noch genügend Fläche in den Pixeln der Kamera abgebildet sein, dass zumindest noch so viel von der Musterumgebung erkennbar ist, dass die erfindungsgemäß durch die Anordnung der einzelnen Musterpunkte relativ zueinander erzeugte flächige Kodierung sicher erkannt werden kann. Außerdem ist diese Methode aus dem gleichen Grund relativ störungsanfällig, bspw. durch Störungen oder Reflexionen in den Bildern der Kameras.

Bei der zeitlichen Kodierung werden mehrere Muster in schneller Folge hintereinander projiziert und aufgenommen. Diese Muster unterscheiden sich leicht voneinander. Die Kodierung liegt hier in der zeitlichen Abfolge von Helligkeitswerten, bspw. Grauwerten, die in jedem Musterpunkt (oder Kamerapixel bzw. den den Musterpunkt abbildenden Kamerapixeln) aufeinander folgen. Diese Methode hat den Vorteil, dass keine Nachbarschaftsinformation für die einzelnen Musterpunkte benötigt wird. Dadurch ist die Erkennung robuster und die laterale Auflösung der Kamera kann voll genutzt werden. Der Nachteil der Methode ist, dass mehrere Bilder benötigt werden, um eine ausreichende Codierung für jeden Musterpunkt zu erhalten.

Erfindungsgemäß wird durch eine Kombination einer flächigen und einer zeitlichen Kodierung eine besonders zuverlässige und robuste Kodierung und Vermessung erreicht, die auch dann noch Informationen über das dreidimensional zu vermessende Objekt liefert, wenn eine der beiden Kodierungen keine oder keine genauen Informationen liefern kann. Die Gründe hierfür können vielfältig sein, wie bspw. zufällige Reflexionen oder zugrundeliegende Objektstrukturen, die Musterstrukturen in der flächigen oder zeitlichen Kodierung überdecken. Durch Korrelation der flächigen und zeitlichen Kodierung wird die Vermessung aber signifikant zuverlässiger, weil Störungen durch die jeweils andere Kodierung in vielen Fällen korrigierbar sind. Bei Vorliegen von Koordinaten der Messpunkten des vermessenen Objekts (auch als Punktwolke von Koordinatenpunkten bezeichnet, die als Gesamtheit die Oberfläche des zu vermessenden Objekts bilden bzw. charakterisieren oder anzeigen) sowohl aus einer flächigen als auch zeitlichen Kodierung wird darüber hinaus die erreichbare Genauigkeit aufgrund der Redundanzen erhöht, zumal die unterschiedlichen Kodierungen mit unterschiedlicher Empfindlichkeit auf verschiedene Störungen reagieren.

Gemäß einer bevorzugten Ausführungsform kann das zeitlich kodierte Muster durch mindestens eine räumliche Verschiebung oder mehrere (ggf. auch verschiedene) räumliche Verschiebungen desselben (vollständig) flächig kodierten Musters erzeugt werden. Hierdurch wird erreicht, dass in einem Musterpunkt bzw. auch Kamerapixel zeitlich versetzt unterschiedliche Musterinformationen dargestellt werden. Hierdurch lässt sich durch eine bestimmte Abfolge der zeitlichen Informationen auf einfache Weise eine zeitliche Kodierung erreichen.

Vorzugsweise ist die Größe der räumlichen Verschiebung klein bzw. gering im Vergleich zur Gesamtgröße des projizierten Musters. Beispielsweise liegt die Verschiebung in der Größenordnung eines Musterpunkts, wobei mit Größenordnung etwa ein Bereich des 0,25-fachen bis zum 10-fachen der Größe eines Musterpunkts gemeint sein kann. Vorzugweise ist die Bildauflösung der Kameras größer (höher) als ein Musterpunkt, vorzugsweise mindestens 5 oder 10 mal so groß. Erfindungsgemäß kann die Größe eines Musterpunkts bei der Abbildung des Musterpunkts in der Kamera aber auch der Größe eines Pixel der Kamera entsprechen. Ein sinnvolles Verhältnis von Auflösung der Kameras und Größe des projizierten Musterpunkts hängt auch von der Größe und Art des Objekts ab, und kann vom Fachmann nach Bedarf eingestellt werden.

Bei der flächigen Kodierung ist mit einem Bildpunkt grundsätzlich ein Musterpunkt gemeint, der im Folgenden noch näher definiert wird. Da die Pixelauflösung der Kameras erfindungsgemäß in vielen Fällen größer ist als die Rasterung des Musters mit einzelnen Musterpunkten, werden für die Auswertung meist mehrere Kamerapixel (im Sinne der technisch kleinstmöglichen Bildpunkte) erfindungsgemäß zusammengefasst, um Musterpunkte als Bildpunkte zu beschreiben, die dann mittels Bildverarbeitung ausgewertet werden, um flächige Korrespondenzen zu finden. Grundsätzlich können erfindungsgemäß aber auch einzelne Kamerapixel als Bildpunkte betrachtet werden.

Dies (d.h. die Auswertung einzelner Kamerapixel als Bildpunkte) ist erfindungsgemäß bevorzugt bei der zeitlichen Kodierung der Fall, in der es technisch einfacher ist, jeden Bildpunkt eines Kamerabilds auf die zeitliche Abfolge der Inhaltswerte zu untersuchen, so die zeitliche Kodierung zu erfassen und Korrespondenzen in den Bildern der anderen Kameras zu finden.

Entsprechend einer bevorzugten Ausführungsform der Erfindung können die ausgewerteten Bildpunkte bei der flächigen und der zeitlichen Kodierung also verschieden definiert sein. Das erfindungsgemäß vorgeschlagene Korrelieren der Korrespondenzen der flächigen Kodierung und der zeitlichen Kodierung erfolgt erfindungsgemäß in diesem Fall bevorzugt auf Basis der kleineren Bildpunkte, d.h. konkret der Kamerapixel.

Die Definition unterschiedlicher Bildpunkte bei den unterschiedlichen Kodierungen ist jedoch optional, weil das Verfahren grundsätzlich auch durchführbar ist, wenn die Bildpunkte bei der Auswertung der beiden Kodierungen gleich (auf die eine oder die andere Weise) definiert sind.

Erfindungsgemäß kann vorgeschlagen sein, dass die räumliche Verschiebung des Musters und die Aufnahme der Szene durch die zeitgleich getriggerten Kameras nicht aufeinander abgestimmt sind. Damit ist gemeint, dass diese nicht in einem vorgegebenen Bezug zueinanderstehen, sondern zeitlich zufällig zueinander liegen. Hierdurch wird das Auftreten systematischer Fehler vermieden.

Ferner kann die Größe der räumlichen Verschiebung zwischen den nacheinander aufgenommenen Szenen zur Erzeugung einer zeitlichen Kodierung unterschiedlich sein. Auch dies dient der Vermeidung systematischer Fehler durch zufällige Übereinstimmungen der Größe der Verschiebung des Musters und möglicher auf dem Objekt erkennbarer Strukturen.

Gemäß einer erfindungsgemäß bevorzugten Ausführungsform kann vorgesehen werden, dass die Größe mindestens einer der räumlichen Verschiebungen kleiner ist als ein Musterpunkt des flächigen Musters, bspw. etwa die Hälfte eines Musterpunkts. Unter Musterpunkt wird - entsprechend einem Pixel bei der Bildaufnahme - der in dem Muster dargestellte kleinste Musterbereich verstanden, aus dem durch flächiges Aneinanderfügen verschiedener kleinster Musterbereiche (mit in der Darstellung verschiedenem und/oder gleichem Inhalt, wobei ein Musterbereich jeweils einem Inhaltswert wie Farbe oder Helligkeit zugeordnet ist) das Gesamtmuster dargestellt werden kann. Anders beschrieben wird ein Musterpunkt durch einen Rasterpunkt gebildet, der bei der Rasterung des gesamten Musters durch jeweils benachbarte (aneinander anschließende) Rasterpunkte entsteht, wobei einem Rasterpunkt (respektive Musterpunkt) ein flächig gleicher Inhalt (Inhaltwert wie Farbe oder Helligkeit) zugeordnet ist.

Durch dieses Merkmal wird vermieden, dass systematische Strukturen auf dem Objekt und/oder der Objektoberfläche, deren Größe den Musterpunkten bzw. der durch die Musterpunkte vorgegebenen systematischen Rasterstruktur des Musters auf dem Objekt entspricht, zu systematischen Fehlern bei der Bewertung der Korrelationen führen.

Es ist erfindungsgemäß auch möglich, das zeitlich kodierte Muster durch phasenversetzte Projektion einer Helligkeitsverteilung zu erzeugen. Eine (zeitlich) phasenversetzte Projektion kann als alleinige Realisierung eines zeitlich kodierten Musters oder in Kombination mit der vorstehend beschrieben räumlichen Verschiebung eines flächigen Musters in einer oder mehreren der vorbeschriebenen Ausgestaltungen realisiert werden.

Die phasenversetzte Projektion einer Helligkeitsverteilung kann bspw. durch Projektion eines flächigen Musters mit unterschiedlichen Projektionshelligkeiten erfolgen. Als Muster kann jedes beliebige flächige Muster verwendet werden. Dies hat den Vorteil, dass für die Musterprojektion ein einfacher Diaprojektor verwendet werden kann, der ein auf einen transparenten Träger (Dia) (körperlich) vorhandenes Muster projiziert, wobei verschiedene Helligkeiten durch entsprechende Ansteuerung der Projektionslampen und/oder durch Filter unterschiedlicher Dichte, bspw. Graufilter, erzeugt werden, die dem transparenten Träger des Musters (Musterträger) in der Projektion überlagert werden.

Ein solcher Diaprojektor kann auch für die vorbeschriebene räumliche Verschiebung eines flächigen Musters genutzt werden. Hier ist es ausreichend, den mit dem das Muster tragenden Dia versehenen Diaträger des ansonsten feststehenden Diaprojektors (einschließlich dessen raumfest angeordneten Projektionsoptik) räumlich (minimal) zu verschieben und/oder zu verkippen (nachfolgend auch allgemein als "bewegen" bezeichnet). Die Bewegung wird dann entsprechend der Projektionsoptik auf der Oberfläche des Objekts dargestellt. Damit wird die Verschiebung des Dias entsprechend der Projektionsvergrößerung auf dem Objekt abgebildet. Dies ist mit dem Begriff "minimale Verschiebung und/oder Verkippung" gemeint. Es ist also eine um den Faktor der Projektionsvergrößerung verminderte Bewegung des Dia vor der Projektionsoptik ausreichend, um die gewünschte räumliche Verschiebung des Musters auf dem Objekt zu erreichen.

Der Vorteil derartiger Diaprojektoren, die erfindungsgemäß für das Durchführen des hier beschriebenen Verfahrens verwendet werden können, liegt darin, dass diese günstig, robust und technisch leicht handhabbar sind. Sie eignen sich daher insbesondere auch für Industrieumgebungen.

Grundsätzlich ist es auch möglich, Digitalprojektoren zu verwenden, die beliebige auf einem Display darstellbare Muster projizieren können. Neben flächigen (Struktur-) Mustern können diese bspw. auch eine - an sich strukturlose - Helligkeitsverteilung auf das Objekt projizieren, deren räumliche Lage sich zeitlich phasenverschoben ändert. Ein typisches Beispiel ist ein zeitlich phasenverschobenes Sinus-Helligkeitsprofil, das besonders einfach erzeugbar und handhabbar ist. Bei einem solchen Phasenshift-Verfahren werden bspw. sinusförmige Grauwertverläufe phasenverschoben projiziert. Theoretisch kann man für einen solchen Sinus-Verlauf mit drei phasenverschobenen Mustern auskommen, in der Praxis werden jedoch fast immer mindestens vier phasenverschobene Muster benutzt. Um die Mehrdeutigkeiten des Sinusverlaufes auflösen zu können, benötigt man in industriellen Umgebungen meist noch deutlich mehr Muster. Dies kann durch Digitalprojektoren vergleichsweise einfach umgesetzt werden. Natürlich ist die Erfindung nicht grundsätzlich auf die hier beispielhaft beschriebenen sinusförmigen Grauwertverläufe (oder allgemeiner Helligkeitsverläufe) beschränkt.

Bei der Verwendung (herkömmlicher) Diaprojektoren ist es erfindungsgemäß einfacher, Verfahrensvarianten zu verwenden, bei denen nur ein flächiges Muster projiziert wird. Beispielsweise durch die Verwendung geeigneter Diamagazine (mit der entsprechenden Positioniergenauigkeit) ist es jedoch grundsätzlich auch möglich, verschiedene (flächig strukturierte) Muster zeitlich nacheinander zu projizieren, auch wenn dies mit Digitalprojektoren einfacher erreichbar ist. Diese sind jedoch technisch aufwendiger und deutlich teurer, erlauben aber auch die Verwendung verschiedenster Muster durch rein digitale Musterdefinition.

Grundsätzlich entspricht es auch einer möglichen Variante des beschriebenen Verfahrens, das zeitlich kodierte Muster durch zeitlich versetzte Projektion verschiedener Muster zu erzeugen. Auch diese Variante des Verfahrens ist grundsätzlich mit allen vorbeschriebenen Varianten frei kombinierbar.

Gemäß einer bevorzugten Ausgestaltung des erfindungsgemäß vorgeschlagenen Verfahrens kann vorgesehen werden, dass für einen Bildpunkt der Muster, in dem vorbeschriebenen Sinn auch als Musterpunkt bezeichnet, eine Korrelation von Informationen aller Kameras durchgeführt wird.

Besonders vorteilhaft ist es, eine Korrelation von Informationen aller Kameras und aller verwendeten Kodierungen, mindestens als der mindestens einen flächigen und der mindestens einen zeitlichen Kodierung, gemeinsam (und gleichzeitig) zu verwenden und einen zur Durchführung des beschriebenen Verfahrens in einer Recheneinheit implementierten Auswertealgorithmus so zu gestalten, dass die gesamte Information aus allen Kameras und/oder allen Kodierungen integriert und zusammen ausgewertet wird. Hierdurch ergeben sich zwei wesentliche Vorteile:

Zum einen ist ein Bildpunkt erst dann nicht messbar, wenn alle Informationsquellen versagen. Mit anderen Worten ist ein Bildpunkt bereits auswertbar, wenn er bei einer der mehreren verwendeten Kodierungen und in zwei Kameras erfasst wird. Die vorzugsweise mehreren Kodierungen und die vorzugsweise mehr als zwei Kameras führen erfindungsgemäß also dazu, dass das Verfahren zur Vermessung von Objekten - gerade in unter bildoptischen Gesichtspunkten technisch schwierigen Industrieumgebungen - robuster wird.

Zum anderen wird für jeden Bildpunkt die maximal mögliche Information verarbeitet. Dies führt zu Redundanzen bei den für einen Bildpunkt zur Verfügung stehenden Informationen, da üblicherweise mehr als die unbedingt benötigten Informationsquellen zur Verfügung stehen. Diese redundanten Informationen können gegenseitig überprüft werden. Nach durch den Fachmann im Einzelfall festlegbaren, geeigneten Kriterien können die insgesamt zur Verfügung stehen redundanten Informationen dann zu einer verlässlichen Bildpunktinformation zusammengefasst werden, bspw. durch algorithmische Verbindung und/oder Verwerfen bestimmter (als fehlerhaft eingestufter) Informationen. Hierbei können Verfahren und Methoden der künstlichen Intelligenz, der Fuzzy-Logik und/oder dergleichen Hilfsmittel zum Einsatz kommen.

Da für die Stereoskopie mindestens zwei Bilder eines Bildpunktes benötigt werden, wird gemäß einer erfindungsgemäßen Ausführungsform vorgeschlagen, die Szene mit mindestens drei Kameras, vorzugsweise vier Kameras, aus verschiedenen Blickwinkeln aufzunehmen. Hierdurch werden redundante Bildaufnahmen geschaffen, die wie vorbeschrieben die Robustheit des Verfahrens weiter erhöhen.

Zur weiteren Verbesserung der vorbeschriebenen (dreidimensionalen) Vermessung des Objekts wird in einer weiteren Ausführungsform vorgeschlagen, die Bilder einzelner der Kameras, d.h. einer oder auch mehrerer Kameras, mittels zweidimensionaler Bildanalyse auszuwerten, insbesondere zur Kantenerkennung, und eine in einem Bild erkannte Kante in eine dreidimensionale Punktewolke zu projizieren. Die dreidimensionale Punktwolke (Gesamtheit der gemessenen Koordinatenpunkte der Oberfläche des Objekts) stellt insbesondere das Ergebnis der dreidimensionalen Vermessung des Objekts, wie sie zuvor beschrieben wurde, dar. Das beschriebene Sensorsystem mit der stereoskopischen Vermessung dreidimensionaler Objekte wird entsprechend auch als Punktewolkensensoren bezeichnet, weil das Ergebnis der Vermessung eine Punktewolke aus (durch die Vermessung erhaltenen) dreidimensionalen Koordinatenpunkten bildet, die die Oberfläche des zu vermessenden Objekts beschreiben.

Derartige Vermessungen können flächige Objekte, d.h. Objekte mit einer kontinuierlich ausgebildeten Oberfläche (d.h. flächigen Merkmalen) sehr gut vermessen. An unstetigen Übergängen, wie z.B. Kanten, Schnittkanten, Löchern, stufenartigen Erhöhungen oder dgl., treten aber häufig Problemen auf. Gerade bei Sensoren mit aktiver Beleuchtung, sei es mit oder ohne Musterprojektion, kommt es an solchen Kanten oft zu optischen Effekten wie Überstrahlungen oder Abdunkelungen, die die Messung stören. Das kommt daher, dass die (in diesem Text zusammenfassend als "Kanten" bezeichneten Unstetigkeiten) in der Realität niemals ideal sind. Wenn beispielsweise geschnittenes Material eine gewisse Dicke aufweist (wie z.B. Blech), bilden sich an den Kanten kleine Einzüge oder Aufwölbungen aus, die wie optisch Mikrolinsen oder Mikrosammelspiegel wirken.

An scharfen Kanten kommt das Problem hinzu, dass ein Kamerapixel nicht unendlich klein sein kann. Auf dem Kamerapixel wird letztendlich immer ein (wenn auch kleiner) Bereich der Oberfläche des Objekts abgebildet. Bei einer durch ein Pixel verlaufenden Kante (d.h. einer Unstetigkeit der Oberfläche) liegen also verschiedene (auf dem Kamerapixel abgebildeten) Oberflächen, in dem Abbildungsbereich. Dadurch ergibt sich für dieses Pixel eine Helligkeit, die irgendwo zwischen der Helligkeit der einen Oberfläche und der Helligkeit der anderen Oberfläche liegt, wobei eine der Oberflächen auch ein Hintergrund sein kann, der nicht zu dem zu vermessenden Objekt gehört.

Gängige kamerabasierte 3D-Messverfahren interpretieren solche Helligkeitsunterschiede als Höhenänderung des Objekts, obwohl es gar keine Höhenänderung gibt, sondern nur eine Kante des Objekts durch diese Fläche (Pixel) verläuft. Für Verfahren, bei denen eine flächige Kodierung verwendet wird, gilt das gleiche auch für diesen flächigen Code. Wenn dieser auf der Kante liegt, führt das je nach Verfahren ebenfalls zu scheinbaren Höhenänderungen in den dreidimensionalen Koordinaten der die Vermessung des Objekts beschreibenden Punktwolke.

Da die Form der Kante a-priori meist nicht bekannt ist, lässt sich dieser Effekt nicht mit hoher Genauigkeit kompensieren oder korrigieren. Die auftretenden Effekte an solchen Kanten können sogar dazu führen, dass einzelne Kamerapixel gar nicht mehr auswertbar sind. Die Kodierung der Kamerapixel ist dann nicht mehr interpretierbar. Insbesondere wenn die Kante (vom der Kamera bzw. dem Sensor aus gesehen) die Hinterkante einer Fläche ist, kann in der Punktwolke nicht mehr genau ermittelt werden, wo die Fläche aufhört. Es kann nicht zuverlässig erkannt werden, ob kein Punkt mehr in der Fläche liegt, weil die Fläche zu Ende ist oder weil eine solche Störung vorliegt. Dies ist ein spezielles Problem der dreidimensionalen Auswertung durch Stereometrie.

Eine höhere Genauigkeit bei Unstetigkeiten (respektive Kanten) der Fläche lässt sich erfindungsgemäß erreichen, indem die Kamerabilder nicht nur für den Algorithmus zur 3D-Punktwolkenberechnung benutzt, sondern zusätzlich auch noch zweidimensional ausgewertet werden, d.h. das Bild der oder jeder Kamera oder mehrerer Kameras jeweils einer eigenständigen Bildauswertung zugeführt wird. Mittels einer solchen Auswertung eines einzelnen Kamerabilds können, insbesondere aufgrund von in jedem Bild auftretenden Gradienten in Helligkeit und/oder Farbe, Kanten (im Sinne von Unstetigkeiten) in den Bildern bestimmt werden. Die so bestimmten Kanten werden dann unter Zuhilfenahme der bekannten Kalibrierparameter der Kamera in die Punktwolke projiziert. Damit lässt sich eine erhöhte Genauigkeit an den Kanten erzielen, weil die zweidimensional erkannten Kanten nicht durch die oben beschriebenen Effekte bei der dreidimensionalen Rekonstruktion gestört sind. Erfindungsgemäß lässt sich unter der Annahme eines stetigen Kantenverlaufs sogar eine subpixel-genaue Rekonstruktion der Kante erreichen. Unter der Annahme, dass bei einer erkannten Kante in dem zweidimensionalen Bild ein abrupte Unstetigkeit in der Fläche auftritt, können die bei der dreidimensionalen Vermessungen auftretenden, zuvor beschriebenen Effekte durch Korrelation der Daten geglättet und/oder korrigiert werden.

Sofern eine Kanten in mehreren Bildern erkennbar ist, kann für jedes Bild eine Projektion der Kante in die Punktwolke ermittelt werden, und die Koordinaten der Kantendaten in der Punktwolke, die aus verschiedenen Bildern stammen, können korreliert werden. Die Korrelation bspw. kann durch deine Mittelung, eine gewichtete Mittelung und/oder eine Glättung gemittelter Koordinatendaten erfolgen.

Für die zweidimensionale Bildanalyse kann es insbesondere vorteilhaft sein, wenn zusätzlich Bilder der Szene ohne Projektion eines Musters aufgenommen werden. Zur weiteren Erhöhung der Genauigkeit können die zusätzlichen Bilder mit einer zusätzlichen (unstrukturierten) Beleuchtung aufgenommen werden. Ein Muster kann die zweidimensionale Auswertung stören, weil die Struktur des Musters als Artefakt die zweidimensionale Bildauswertung stören kann. Aber auch wenn keine zusätzlichen Bilder aufgenommen werden, kann die Genauigkeit durch die zweidimensionale Auswertung der mit strukturierter Beleuchtung aufgenommenen Daten schon erhöht werden.

Gemäß einem weiteren Aspekt der Erfindung ermöglicht eine besonders vorteilhafte Ausgestaltung mit Aufnahme der Szene durch vier Kameras eine extrinsische und/oder intrinsische Rekalibrierung des Systems im laufenden Betrieb. Wenn ein Bildpunkt in den Bildern aller vier Kameras sichtbar ist, liegt ein hochredundantes System vor, weil es dann sehr wahrscheinlich ist, dass für jeden Bildpunkt die für die stereoskopische Vermessung des Objekts benötigten Informationen zweier Kameras doppelt vorliegen. Für eine erfindungsgemäß vorgesehene Rekalibrierung werden zwei Teilsysteme aus jeweils zwei verschiedenen Kameras gebildet, wobei zur Kalibrierung eines Teilsystems immer die Messwerte der anderen Teilsysteme benutzt werden. Grundsätzlich geht dies mit nur drei Kameras, indem drei Teilsysteme mit jeweils zwei Kameras gebildet werden, wobei jeweils zwei Kameras umfassende Teilsysteme je genau eine identische Kamera aufweisen. Bei mehr als vier Kameras lässt sich das System beliebig skalieren.

Als Alternative kann man auch das System als Ganzes nachkalibrieren. Dazu kann man eine Abwandlung des - dem Fachmann grundsätzlich bekannten Bündelausgleichs - benutzen. Dies ist in diesem Fall auch in Industrieumgebungen möglich, weil sich aus den vier Kameras genügend Information extrahieren lässt. Grundsätzlich kann diese Nach- oder Rekalibrierung sogar bei jeder Messung durchgeführt werden. Das ist allerdings nicht immer sinnvoll, weil in der Regel sehr viele Messungen in sehr kurzer Zeit durchgeführt werden, in der es üblicher Weise nicht zu einer eine Rekalibrierung erfordernden Dejustage kommt. Insofern wird erfindungsgemäß bevorzugt vorgeschlagen, eine Rekalibrierung in vorgegeben zeitlichen Abständen automatisch und/oder - bspw. nach bestimmten Störungen manuell durchzuführen.

Durch den Einsatz von mindestens drei, vorzugsweise vier, oder ggf. noch mehr Kameras kann also das bei der stereoskopischen Messung in der Praxis bestehende Problem gelöst werden, dass das System sehr sensitiv gegenüber Fehlern in der Kalibrierung reagiert. Um eine stereoskopische Messung durchführen zu können, müssen die beteiligten Kameras sowohl intrinsisch als auch extrinsisch (möglichst genau) kalibriert sein.

Die intrinsische Kalibrierung umfasst die Bestimmung aller Parameter, die die Kamera selbst unabhängig von ihrer Lage beschreiben, also z.B. Brennweite, optische Verzerrungen, Hauptpunktverschiebung, usw. Es sind in der Literatur viele verschiedene Methoden bekannt, wie man eine solche Kalibrierung durchführen kann. Fast alle diese Methoden benutzen ein Muster aus Passpunkten, deren Lage zueinander bekannt ist. Diese Passpunkte können z.B. Punkte auf einer Platte oder auch räumlich verteilt angebrachte Punkte sein. Es wird mit der Kamera ein Bild dieser Punkte aufgenommen. Aus den im Bild erkannten Punktpositionen und den bekannten Relativpositionen dieser Punkte zueinander im Raum können die intrinsischen Parameter bestimmt werden. Je nach Anzahl und Anordnung der Punkte und verwendetem Kameramodell kann die Kamera damit mehr oder weniger genau modelliert werden.

Bei der extrinsischen Kalibrierung wird die Lage der Kamera bezogen auf ein extern vorgegebenes Bezugskoordinatensystem bestimmt. Auch dazu gibt es wieder mehrere in der Literatur beschriebene Methoden, die meistens ebenso Passpunkte benutzen. Wenn die Kamera bereits intrinsisch kalibriert ist, genügen hier sehr viel weniger Punkte (mindestens drei), deren Lage im Bezugskoordinatensystem allerdings bekannt sein muss.

Falls sich während des Betriebs eines stereoskopischen Sensors irgendein Parameter ändert (z.B. durch Erwärmung, leichte Stöße, usw.), kann dies in einem herkömmlichen System unter Industriebedingungen normalerweise nicht festgestellt und/oder korrigiert werden, solange die Parameteränderungen nicht zum Versagen des gesamten Systems führen. Es gibt zwar die Methode des Bündelausgleichs, die dieses Problem theoretisch lösen kann. Diese benötigt jedoch entweder viele Punkte oder zumindest einen bekannten Maßstab im Bild. Beides ist dort oft nicht gegeben.

Daher ist die erfindungsgemäß vorgeschlagene Rekalibrierung im Rahmen des durchgeführten Verfahrens eine besonders vorteilhafte Variante, die auch unabhängig von der gemeinsamen Verwendung einer flächigen und einer zeitlichen Kodierung verwendet werden kann.

Die Erfindung schlägt ferner ein System gemäß Anspruch 12 (im Sinne einer Vorrichtung) zur Vermessung von insbesondere dreidimensionalen Objekten mittels Stereoskopie mit einem Projektor zur Projektion eines flächig und/oder zeitlich kodierten Musters auf die Objektoberfläche und mit Kameras zur Aufnahme des als Szene bezeichneten und auf die Objektoberfläche projizierten Musters sowie mit einer Recheneinheit vor, die durch ein Programm zur Bildverarbeitung dazu eingerichtet ist, in den durch die Kameras aufgenommenen Bildern Korrespondenzen der Szene aufzufinden und mittels der gefundenen Korrespondenzen eine Vermessung des Objekts durchzuführen. Dies kann durch Bestimmen der Punkte der gefundenen Korrespondenzen erfolgen, d.h. mit anderen Worten wird ein Vermessen der Objektoberfläche durchgeführt, die mit dem projizierten Muster beleuchtet ist. Dazu sind die Kameras intrinsisch und extrinsisch kalibriert, wobei mindestens drei Kameras vorgesehen und derart angeordnet sind, dass die Szene aus mindestens drei verschiedenen Blickwinkeln aufgenommen wird.

Hierdurch werden, wie bereits beschrieben, Redundanzen bei der Stereoskopie erreicht, die die Vermessung des Objekts insgesamt robuster machen. Durch die mindestens drei Kameras wird nämlich das weitere Problem bei der Stereoskopie unter Industriebedingungen gelöst, dass für jeden Messpunkt immer Informationen aus zwei Bildern benötigt werden, diese jedoch häufig nicht mit den beiden vorgesehenen Kameras gewonnen werden können. Wenn man 3D-Punktewolken von in der Industrie sehr oft vorkommenden stark glänzenden Teilen aufnehmen möchte, hat man praktisch immer Bereiche in dem durch eine Kamera aufgenommenen Bild, in denen sich Glanzlichter bilden. Da sich diese in jeder Kamera an verschiedenen Stellen bilden (die Kameras haben verschiedene Blickwinkel), können alle Bereiche, in denen in zumindest eine der beiden Kameras gestört ist, nicht gemessen werden. Ein ähnliches Problem tritt bei Abschattungen auf. In herkömmlichen Systemen fallen immer alle Bereiche aus, in denen eines der beiden Kamerabilder gestört ist. Diese Ausfälle werden in dem erfindungsgemäß vorgeschlagenen System mit mindestens drei Kameras signifikant reduziert.

Gemäß einer besonders bevorzugten Ausführungsform des vorgeschlagenen Systems sind mindestens vier Kameras vorgesehen und derart angeordnet, dass die Szene aus mindestens vier verschiedenen Blickwinkeln aufgenommen wird, wobei - wie bereits beschrieben und sowohl für das vorgeschlagene System als auch für das vorgeschlagene Verfahren - alle Kameras extrinsisch und intrinsisch kalibriert sind.

Erfindungsgemäß ist die Recheneinheit weiter dazu eingerichtet, aus den mehreren Kameras jeweils Teilsysteme aus zwei Kameras zu bilden, und eine Rekalibrierung von Kameras aus dem System durchzuführen, indem zur Kalibrierung eines Teilsystems immer die Messwerte der anderen Teilsysteme benutzt werden. Bevorzugte mögliche Varianten dieses erfindungsgemäßen Verfahrens zur Rekalibrierung wurden bereits beschrieben.

Zusätzlich ist die Recheneinheit und/oder der Projektor dazu eingerichtet, eine Musterprojektion mit einer flächigen und einer zeitlichen Kodierung zu erzeugen.

Es wurde bereits beschrieben, dass dieses Verfahren einer Musterprojektion mit einer flächigen und einer zeitlichen Kodierung grundsätzlich auch mit nur zwei Kameras ausführbar ist, auch wenn die Verwendung von mindestens drei Kameras besonders bevorzugt ist. Entsprechend bezieht sich die vorliegende Erfindung auch auf ein System zur Vermessung von Objekten mittels Stereoskopie, mit einem Projektor zur Projektion eines flächig und zeitlich kodierten Musters auf die Objektoberfläche und mit Kameras zur Aufnahme des als Szene bezeichneten auf die Objektoberfläche projizierten Musters und mit einer Recheneinheit, die durch ein Programm zur Bildverarbeitung dazu eingerichtet ist, in den durch die Kameras aufgenommenen Bildern Korrespondenzen der Szene aufzufinden und mittels der gefundenen Korrespondenzen eine Vermessung des Objekts durchzuführen, wobei die Kameras intrinsisch und extrinsisch kalibriert sind, mindestens drei Kameras vorgesehen und derart angeordnet sind, dass die Szene aus mindestens zwei verschiedenen Blickwinkeln aufgenommen wird und die Recheneinheit und/oder der Projektor dazu eingerichtet ist, eine Musterprojektion mit einer flächigen und einer zeitlichen Kodierung zu erzeugen.

Eine besonders bevorzugte Ausführungsform des vorgeschlagenen Systems sieht vor, dass die Recheneinheit dazu eingerichtet ist, das vorbeschriebene Verfahren oder Teile davon durchzuführen. Hierzu wird auf die vorstehende Erläuterung des Verfahrens verwiesen. Die beschriebenen Vorrichtungsmerkmale wird der Fachmann entsprechend nach Bedarf gemeinsam oder entsprechend der beschriebenen Funktion soweit notwendig in Teilen in das erfindungsgemäß vorgeschlagene System übernehmen.

In einem solchen besonders bevorzugten erfindungsgemäßen System und/oder Verfahren werden die Nachteile der bisher bekannten Systeme vermieden. Dies geschieht durch die Kombination von zwei Maßnahmen, die jede für sich auch schon Kombinationen von Maßnahmen darstellen, nämlich dem gemeinsamen Erzeugen von flächigen und zeitlichen Kodierungen und der Verwendung mindestens dreier Kameras. Diese Maßnahmen führen zu einem hohen Maß redundanter Daten, die miteinander korreliert werden, um die Verlässlichkeit und Robustheit der aus der Stereoskopie gewonnen Informationen zu verbessern.

Nachfolgend werden weitere Vorteile, Merkmale und Anwendungsmöglichkeiten der Erfindung anhand eines bevorzugten Ausführungsbeispiels und der Zeichnung beschrieben.

Es zeigen:
- Fig. 1: schematisch eine Ausführungsform des erfindungsgemäß vorgeschlagenen System;
- Fig. 2: beispielhaft ein erfindungsgemäß anwendbares flächiges Muster, das auf die Objektoberfläche des zu vermessenden Objekts projiziert wird, und
- Fig. 3: einen schematischen Verfahrensablauf einer Grundausführungsform des erfindungsgemäß vorgeschlagenen Verfahrens.
- Fig. 4: schematisch die Vermessung eines Objekts in einem Raster mittels Stereoskopie zu einer Punktwolke aus einer Vielzahl dreidimensionaler Koordinatenpunkte;
- Fig. 5: schematisch die Rekonstruktion einer Objektkante zwischen einer oberen und einer unteren Oberfläche in der Punktwolke gemäß Fig. 4; und
- Fig. 6: schematisch die aus einer zweidimensionalen Bildanalyse zur Kantenerkennung ermittelte Kante in Projektion in die Punktwolke gemäß Fig. 5;

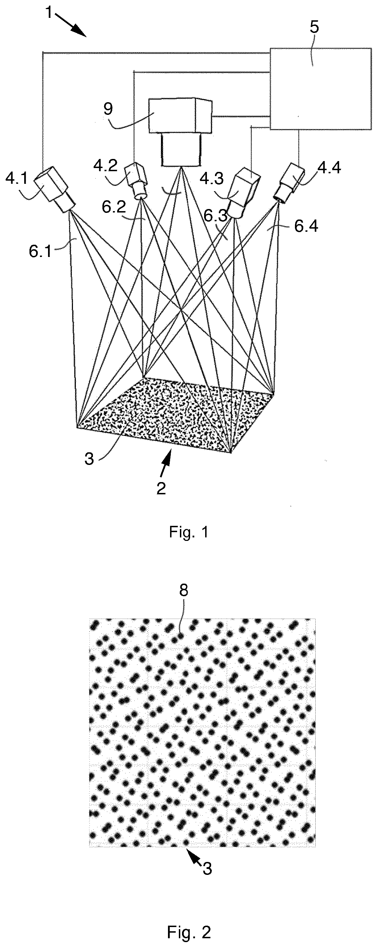

Fig. 1 zeigt ein System 1 zur Vermessung eines dreidimensionalen Objekts 2 mittels Stereoskopie beispielhaft in einer schematisch dargestellten Ausführungsform. In der schematischen Darstellung der Fig. 1 ist das dreidimensionale Objekt der Übersichtlichkeit halber als plane Oberfläche dargestellt; die Erfindung bezieht sich aber ausdrücklich auf beliebige dreidimensionale Objekte 2, zu denen auch plane Oberflächen gehören.

Das System 1 weist einen Projektor 9 zur Projektion eines (flächig und/oder zeitlich) kodierten Musters 3 auf die Oberfläche des Objekts 2 auf. In dem System 1 gemäß einer besonders bevorzugten Ausführungsform sind vier Kameras 4.1, 4.2, 4.3 und 4.4 zur Aufnahme des (als Szene bezeichneten) auf die Objektoberfläche projizierten Musters 3 vorgesehen. Der Projektor 9 kann ein herkömmlicher Diaprojektor oder ein digitaler Projektor sein, in dem das zu projizierende Muster 3 auf einem transparenten Display nach einer digitalen Vorlage erzeugbar ist.

Ferner ist eine mit dem Projektor 9 und den Kameras 4.1, 4.2, 4.3 und 4.4 in Verbindung stehende Recheneinheit 5 vorgesehen, die durch ein Programm zur Bildverarbeitung dazu eingerichtet ist, in den durch die Kameras 4.1, 4.2, 4.3, 4.4 aufgenommenen Bildern Korrespondenzen der Szene aufzufinden und mittels der gefundenen Korrespondenzen eine Vermessung des Objekts 2 durchzuführen, und zwar durch Bestimmen der Punkte (Koordinaten) der gefundenen Korrespondenzen. Mit anderen Worten wird ein Vermessen des Objekts 2 mittels der Korrespondenzen von Bildpunkten des projizierten Musters 3 auf der Oberfläche des Objekts 2 durchgeführt. Dabei werden die Koordinaten der Bildpunkte des projizierten Musters auf der Oberfläche bestimmt, für die Korrespondenzen in den Bildern der verschiedenen Kameras 4.1, 4.2, 4.3, 4.4 gefunden wurden.

Dazu sind die Kameras intrinsisch und extrinsisch kalibriert. Die Szene (d.h. das auf die Oberfläche des Objekts 2 projizierte Muster 3, wird durch die Kameras 4.1, 4.2, 4.3, 4.4 aus verschiedenen Blickwinkeln 6.1, 6.2, 6.3, 6.4 aufgenommen, die in Fig. 1 für jede Kamera 4.1, 4.2, 4.3, 4.4 durch von den Kameras 4.1, 4.2, 4.3, 4.4 zu den Ecken des aufgenommenen Bereichs der Oberfläche des Objekts (der den aufgenommenen Bildern entspricht) ausgehende Sichtstrahlen symbolisiert sind. Die Kameras 4.1, 4.2, 4.3, 4.4 sind vorzugsweise Digitalkameras, deren Bilder unmittelbar durch die Recheneinheit verarbeitbar sind. Die Projektion 7 ist durch entsprechende von dem Projektor 9 ausgehende Sichtstrahlen angezeigt.

Nachfolgend wird anhand eines bevorzugten Ausführungsbeispiels die Vermessung des Objekts 2 mittels Stereoskopie beschrieben. Dabei müssen im Rahmen der vorgeschlagenen Erfindung nicht unbedingt alle der nachstehend beschriebenen Schritte und Merkmale realisiert werden. Auch sind Variationen der einzelnen Schritte denkbar, von denen einige eingangs bereits erläutert oder angedeutet wurden.

Durch den Projektor 9 wird ein vollständig kodiertes flächiges Muster 3 benutzt, das eine flächige Kodierung erzeugt und so für die Erkennung von Korrespondenzen in einem einzigen Bild geeignet ist. Das zu projizierende bzw. auf eine plane Ebene projizierte Muster 3 ist mit einzelnen Musterpunkten 8 in Fig. 2 noch einmal detaillierter anhand eines Beispiels dargestellt.

Als besonders vorteilhaft hat sich ein zufallscodiertes Muster 3 erwiesen (Pseudo-Random-Muster), weil man mit diesem großflächige Muster erzeugen kann, die noch in kleinen Bereichen mit wenigen Musterpunkten eindeutig kodiert sind, und weil sie leicht auszuwerten sind.

Dieses Muster 3 wird zusätzlich mehrfach hintereinander leicht verschoben, sodass sich zusätzlich zur flächigen Kodierung noch eine zeitliche Kodierung ergibt, in der einzelne Bildpunkte des projizierten Musters 3 im Bild der Kameras 4.1, 4,2, 4.3, 4,4 unterschiedliche Informationen im Zeitverlauf zeigen. Durch die zeitlich verschiedenen Informationen wird eine zeitliche Kodierung erreicht.

Das bevorzugt vorgeschlagene Vorsehen einer flächigen und einer zeitlichen Kodierung kombiniert die Vorteile der flächigen und der zeitlichen Kodierung, ohne die Nachteile mit zu übernehmen, da es für jeden Punkt bzw. die Vermessung jedes Punktes (Bildpunktes) ausreicht, dass eine der Kodierungen erfolgreich ausgewertet werden kann. Außerdem wird für die Punkte, für die die gesamte Information aus beiden Kodierungen vorliegt, das Verfahren aufgrund der Redundanzen sehr robust, und man erzielt eine sehr gute Genauigkeit.

Als vorteilhaft hat sich eine zufällige kleine Verschiebung desselben Musters erwiesen. Dies ist deshalb von Vorteil, weil es sehr einfach und kostengünstig zu realisieren ist. Man benötigt keinen aufwändigen Projektor 9 der in der Lage ist, verschiedene Bilder zu projizieren. Stattdessen genügt ein einfacher Projektor 9, bei dem ein einziges Dia zufällig bewegt wird. "Zufällig" bezieht sich dabei darauf, dass die Bewegung in keinem Bezug zu den Zeitpunkten der Bildaufnahmen steht. Man könnte auch eine regelmäßige Bewegung nutzen, die nicht zur Bildaufnahme synchronisiert ist.

Als besonders Vorteilhaft hat es sich erweisen, wenn unter den Verschiebungen auch solche dabei sind, die kleiner sind als ein Musterpunkt 8 des flächigen Musters 3, weil sich dadurch die Genauigkeit weiter erhöhen lässt. Die Methode funktioniert jedoch auch, wenn diese Bedingung nicht eingehalten wird. Außerdem könnten auch verschiedene Muster 3 hintereinander projiziert werden.

Bevorzugt werden mehr als zwei, insbesondere wie dargestellt, vier Kameras 4.1, 4.2, 4.3, 4.4 aus verschiedenen Blickwinkeln 6.1, 6.2, 6.3, 6.4 verwendet, die alle in dasselbe Messvolumen schauen, d.h. dasselbe durch den Projektor 9 projizierte Muster 3 sehen und aufnehmen.

Dadurch wird der Nachteil, dass Reflexe in jeder Kamera 4.1, 4.2, 4.3, 4.4 an anderen Stellen des Bildes auftreten, zum Vorteil. Da man jede Stelle nur mit mindestens zwei Kameras 4.1, 4.2, 4.3, 4.4 sehen muss, gibt es nur noch sehr viel weniger Stellen, die man nicht messen kann, d.h. in denen nicht mindestens zwei der vier Kameras 4.1, 4.2, 4.3, 4.4 ein auswertbares Bild liefern.

Gleiches gilt auch für Abschattungen und alle anderen Arten von Störungen, die für die verschiedenen Kameras 4.1, 4.2, 4.3, 4.4 (aufgrund der unterschiedlichen Blickwinkel 6.1, 6.2, 6.3, 6.4) an verschiedenen Stellen des Bildes auftreten bzw. auftreten können.

Als besonders vorteilhaft haben sich vier Kameras 4.1, 4.2, 4.3, 4.4 erweisen, weil es dann sehr wahrscheinlich ist, dass für jeden Bildpunkt mindestens zwei Kameras 4.1, 4.2, 4.3, 4.4 Information liefern. Vorteilhaft ist es außerdem, einen Algorithmus zu benutzen, der die Kameras nicht paarweise auswertet, sondern für jeden Bildpunkt alle Kameras 4.1, 4.2, 4.3, 4.4, die Information über den Bildpunkt liefern, gemeinsam. Dadurch wird die Genauigkeit erhöht und die Messung robuster.

Da es sich hier um ein hochredundantes System handelt, kann zudem die Kalibrierung immer wieder neu bestimmt werden, wie bereits ausführlich erläutert wurde.

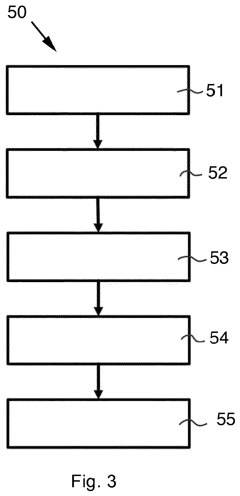

Der in Fig. 3 dargestellte Verfahrensablauf beschreibt die Ausführung einer Basisvariante des erfindungsgemäß vorgeschlagenen Verfahrens, das mit den bereits beschriebenen Ausführungsvarianten nach Bedarf ergänzt werden kann und mit den in den Fig. 1 und 2 beispielhaft beschriebenen Systemen ausgeführt werden kann.

Im Rahmen des vorgeschlagenen Verfahrens 50 zur Vermessung von Objekten 2 mittels Stereoskopie, wird in einem ersten Verfahrensschritt 51 mittels des Projektors 9 ein flächig kodiertes Muster 3 auf die Objektoberfläche projiziert und das als Szene bezeichnete und auf die Objektoberfläche projizierte Muster 3 mit den vier Kameras 4.1, 4.2, 4.3, 4.4, die vorzugsweise zeitgleich getriggert ausgelöst werden, aufgenommen. Hierdurch wird die flächige Kodierung erzeugt.

Anschließend wird in einem zweiten Verfahrensschritt 52 ein zeitlich kodiertes Muster mit flächig unterschiedlicher Kodierung mehrfach nacheinander projiziert und mehrere Szenen nacheinander mit den Kameras 4.1, 4.2, 4.3, 4.4 jeweils zeitgleich getriggert aufgenommen. Hierdurch wird ein zeitlich kodiertes Muster erzeugt, wobei jede Szene für sich auch eine eigenständige flächige Kodierung darstellt. Das zeitlich kodierte Muster wird durch mehrere räumliche Verschiebungen desselben flächig kodierten Musters 3 erzeugt.

In einem weiteren Verfahrensschritt 53 werden bei der flächigen Kodierung in der Szene für einen Bildpunkt durch Vergleich mit benachbarten Bildpunkten Korrespondenzen in den durch die verschiedenen Kameras 4.1, 4.2, 4.3, 4.4 aufgenommen Bildern gefunden. Hierdurch werden dieselben Bildpunkte in den einzelnen Bildern identifiziert sowie ggf. vermessen.

In einem weiteren Verfahrensschritt 54 werden bei der der zeitlichen Kodierung für die mehreren Szenen in jeweils denselben Bildpunkten der durch die verschiedenen Kameras aufgenommenen Bilder Korrespondenzen gefunden. Hierdurch werden dieselben Bildpunkte in einzelnen Bildern identifiziert sowie ggf. vermessen.

In einem nachfolgenden Verfahrensschritt 55 werden für jeden Bildpunkt die gefundene Korrespondenzen der flächigen Kodierung und der zeitlichen Kodierung korreliert und diese Korrelationen bei der Vermessung des Objekts verwendet.

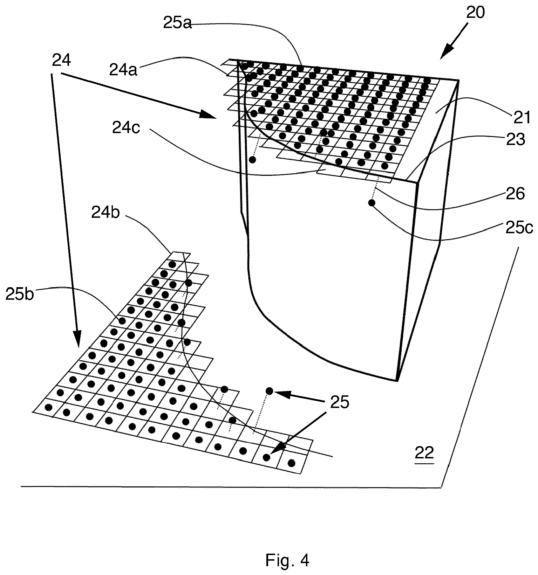

Fig. 4 zeigt schematisch das Ergebnis der Vermessung eines dreidimensionalen Objekts 20, das in dieser Figur schematisch in der Kontur mit eingeblendet ist. Das Objekt weist eine bezogen auf die Objekthöhe obere Oberfläche 21 (im Sinne einer höherliegende Oberfläche) und eine untere Oberfläche 22 (im Sinne einer tieferliegenden Oberfläche) auf. Die obere Oberfläche 21 hat an ihrem Rand eine Kante 23, an der sie in die untere Oberfläche 22 übergeht.

Es ist ferner ein Raster 24 dargestellt, mit dem die Oberfläche des Objekts 20 durch die Vermessung de facto abgetastet werden soll. Idealer Weise ist ein Rasterelement 24a der oberen Oberfläche 21 und ein Rasterelement 24b der unteren Oberfläche 22 zugeordnet. Das Raster 24 wird bei der Vermessung entsprechend dem erfindungsgemäßen Verfahren erzeugt, wobei jedes der Rasterelemente 24a, 24b durch einen dreidimensionalen Koordinatenpunkt 25 beschrieben wird, der durch Stereoskopie ermittelt wurde. Die Rasterelementgröße kann mit dem Pixel der Kamera übereinstimmen, muss dies aber nicht. Üblicher Weise wird ein Rasterelement bevorzugt durch mehrere zusammengefasste Kamerapixel gebildet. Die Gesamtheit der Koordinatenpunkte 25 wird auch als Punktwolke bezeichnet, die als Ergebnis der Vermessung die Oberfläche des Objekts 20 beschreibt. Entsprechend sind Koordinatenpunkte 25a der oberen Oberfläche und Koordinatenpunkte 8b der unteren Oberfläche 25b zugeordnet.

Koordinatenpunkte 25c beschreiben Rasterelemente, die im Bereich der Kante 23 liegen. Diese sind meist mit einem Fehler 26 behaftet, der darin begründet ist, dass die Auswertung der Kamerapixel im Bereich der Kante schwierig ist und die Koordinaten der Rasterelemente des Rasters 24 mittels Stereoskopie häufig nur mit größeren Fehlern bestimmbar sind. Außerdem gibt es Rasterelemente 24c, für die gar kein Koordinatenpunkt berechnet wurde, bspw. weil die stereoskopische Auswertung der Kamerabilder fehlerhaft war. Auch derartige Rasterelemente 24c ohne Koordinatenpunkt finden sich häufig im Bereich der Kante 23.

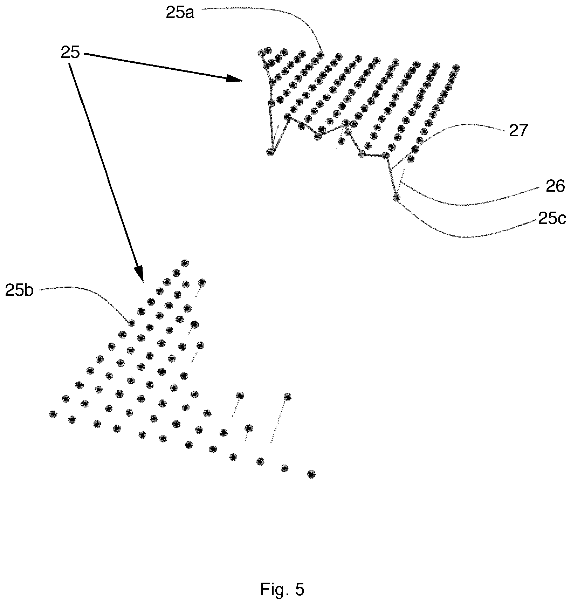

Während Fig. 5 das systematische Vorgehen bei der Vermessung des Objekts 20 theoretisch veranschaulicht, zeigt Fig. 4 die Punktewolke als Gesamtheit der Koordinatenpunkte 25, wie sie durch das erfindungsgemäß vorgeschlagene Verfahren ermittelt werden. Im Bereich der kontinuierlichen Oberflächen 24a, 24b lässt sich die Oberfläche des Objekts 20 durch die Koordinatenpunkte 25a, 25b insgesamt sehr gut erkennen.

Die rekonstruierte Kante 27, die aus einer solchen Punktewolke 25 (d.h. der Gesamtheit der Koordinatenpunkte) extrahiert werden würde, ist jedoch fehlerbehaftet, weil die fehlerbehafteten Koordinatenpunkte 25c und die sich aus den Rasterelementen 24c ergebenden Lücken mit in die rekonstruierte Kante 25 eingehen, die daher unscharf und zerfranst ist.

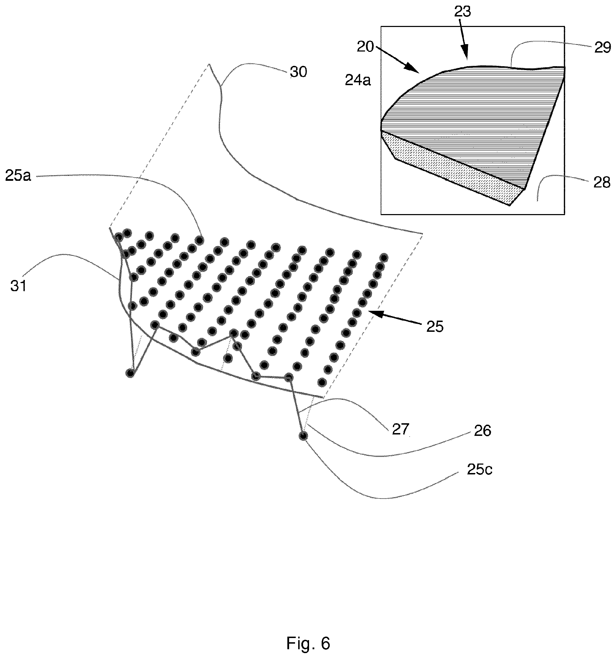

Zur Korrektur schlägt die Erfindung im Bereich von Kanten 23 (zu verstehen allgemein als diskontinuierlicher Oberflächenbereich des Objekts 20) vor, ein Kamerabild 28 mindestens einer der Kameras 4.1, 4.2, 4.3, 4.4, mit der die Szene aufgenommen wird, zusätzlich zu der Vermessung des Objekts mittels Stereoskopie auch mittels zweidimensionaler Bildanalyse zur Kantenerkennung auszuwerten. Dies ist in Fig. 6 schematisch dargestellt.

Fig. 6 zeigt den oberen Teil der Punktewolke mit den die obere Oberfläche 24a des Objekts 20 repräsentierenden Koordinatenpunkten 25a. Außerdem sind die rekonstruierte Kante 27 und die zugehörigen Koordinatenpunkten 25a, 25c der oberen Oberfläche 25a und an der Kante 23 eingezeichnet.

In dem Kamerabild 28 dieser Szene von einer der Kameras 4.1, 4.2, 4.3, 4.4 wurde die Kante 23 des Objekts 20 zusätzlich mittels zweidimensionaler Bildanalyse ausgewertet, bei der erfindungsgemäß auch eine Kantenerkennung durchgeführt wurde. Dies kann durch übliche Methoden zur zweidimensionalen Bildauswertung erfolgen, bspw. durch eine Konturerkennung. Diese Verfahren sind dem Fachmann grundsätzlich bekannt und müssen nicht weiter beschrieben werden.

Hierdurch lässt sich die Kante 23 in dem Kamerabild 28 subpixelgenau extrahieren und in den zweidimensionalen Bildkoordinaten entsprechend parametrisiert. Die parametrisierte Kante 29 kann, wie in Fig. 6 gezeigt, als Linie dargestellt werden. Sie überdeckt den Verlauf der Kante 23 in dem aufgenommenen Bild 28.

Diese in dem zweidimensionalen Bild parametrisierte Kante 29 wird mit Hilfe der bekannten Kamerakalibrierung in die realen Koordinaten der Szene transformiert. Mit anderen Worten findet also eine Transformation der zweidimensional parametrisierten Kante 29 in die dreidimensionale Szene statt. Die parametrisiere Kante 29 ist damit als dreidimensionale Kante 30 in den Koordinaten der Szene darstellbar.

Schließlich kann die dreidimensionale Kante 30 in die Punktewolke der Koordinatenpunkte, die die Oberfläche des vermessenen Objekts 20 beschreibt, projiziert werden. Diese Projektion kann dreidimensionalen Kante 30 in die Punktewolke der Koordinatenpunkte ist in Fig. 6 durch die gestrichelten Linien dargestellt. Diese Projektion ist keine Transformation; die dreidimensionalen Koordinaten der dreidimensionalen Kante 30 und der projizierten Kante 31 sind gleich. Es geht in der Projektion nur um eine gemeinsame Darstellung der Koordinatenpunkte 25 und der dreidimensionalen Kante 30. Dies betrifft eine graphische Projektion, wie die durch Fig. 6 dargestellt ist. Unter Projektion im Sinne dieses Textes ist aber auch eine numerische Projektion zu verstehen, die bspw. einer numerischen Rekonstruktion der Oberfläche des Objekts 20 dient und bei der die dreidimensionale Kante 30 und die Koordinatenpunkte 25c an der Kante berücksichtigt werden können, um insgesamt einen realistischen Kantenverlauf in der Vermessung der Oberfläche zu erzeugen, bspw. durch Mittelung der den Kantenverlauf beschreibenden Koordinaten, durch Unterdrücken identifizierter Fehlerkoordinaten oder dgl..

Damit kann die Kante 23 des Objekts 20 wesentlich genauer vermessen (bestimmt) werden als nur aus der Punktewolke der durch Stereometrie rekonstruierten Koordinatenpunkte 25. Hier ist von besonderen Vorteil, dass die subpixel-genaue Rekonstruktion des Kantenverlaufs zu einer westlichen präziseren und glatteren Rekonstruktion führt als eine rein stereometrische Messung.

Es sei noch angemerkt dass aus Gründen der Übersichtlichkeit hier eine ebene Kante gezeichnet wurde. Die Methode funktioniert aber mit jeder beliebig geformten Kante, wobei als Kante im Sinne dieser Beschreibung jede Singularität bzw..jeder unstetige (sprunghafte) Übergang in der Oberfläche des Objekts 20 angesehen wird.

Durch die erfindungsgemäß vorgeschlagene Kombination von flächigen und zeitlichen Kodierungen und die Verwendung von mindestens drei Kameras 4.1, 4.2, 4.3, 4.4 wird die Vermessung dreidimensionaler Objekte 2 besonders robust.

### Bezugszeichenliste:

- 1: System zur Vermessung eines dreidimensionalen Objekts
- 2: dreidimensionales Objekt
- 3: projiziertes / zu projizierendes Muster
- 4.1: Kamera
- 4.2: Kamera
- 4.3: Kamera
- 4.4: Kamera
- 5: Recheneinheit
- 6.1: Blickwinkel der Kamera
- 6.2: Blickwinkel der Kamera
- 6.3: Blickwinkel der Kamera
- 6.4: Blickwinkel der Kamera
- 7: Projektion
- 8: Musterpunkte des projizierten / zu projizierenden Musters
- 9: Projektor

- 20: Objekt
- 21: obere Oberfläche des Objekts
- 22: untere Oberfläche des Objekts
- 23: Kante
- 24: Raster
- 24a: Rasterelement der oberen Oberfläche
- 24b: Rasterelement der unteren Oberfläche
- 24c: Rasterelement ohne Koordinatenpunkt
- 25: Koordinatenpunkte eines Rasterelements
- 25a: Koordinatenpunkt der oberen Oberfläche
- 25b: Koordinatenpunkt der unteren Oberfläche
- 25c: Koordinatenpunkte an der Kante
- 26: Fehler des Koordinatenpunkts
- 27: rekonstruierte Kante
- 28: Kamerabild
- 29: parametrisierte Kante
- 30: dreidimensionale Kante
- 31: projizierte Kante

- 50: Verfahren zur Vermessung von Objekten mittels Stereoskopie
- 51: Verfahrensschritt
- 52: Verfahrensschritt
- 53: Verfahrensschritt
- 54: Verfahrensschritt
- 55: Verfahrensschritt

## Patentansprüche

1. Verfahren zur Vermessung eines Objekts (2) mittels Stereoskopie, bei dem mittels eines Projektors (9) ein Muster (3) auf die Objektoberfläche projiziert wird und das als Szene bezeichnete auf die Objektoberfläche projizierte Muster (3) mit mindestens drei intrinsisch und extrinsisch kalibrierten Kameras (4.1, 4.2, 4.3, 4.4) aufgenommen wird, wobei mittels einer Recheneinheit (5) durch Bildverarbeitung in den durch die Kameras (4.1, 4.2, 4.3, 4.4) aufgenommenen Bildern Korrespondenzen der Szene aufgefunden werden und mittels der gefundenen Korrespondenzen eine Vermessung des Objekts (2) durchgeführt wird, wobei bei der Musterprojektion eine flächige und zeitliche Kodierung erzeugt wird, indem
• ein vollständig flächig kodiertes Muster (3) projiziert und die Szene mit den Kameras (4.1, 4.2, 4.3, 4.4) aufgenommen wird, und
• ein zeitlich kodiertes Muster mit flächig unterschiedlicher Kodierung mehrfach nacheinander projiziert und mehrere Szenen nacheinander mit den Kameras (4.1, 4.2, 4.3, 4.4) jeweils zeitgleich getriggert aufgenommen werden,
wobei
• bei der flächigen Kodierung für die Szene Korrespondenzen benachbarter Bildpunkte in den durch die verschiedenen Kameras (4.1, 4.2, 4.3, 4.4) aufgenommen Bildern gefunden werden,
• bei der zeitlichen Kodierung für die mehreren Szenen in jeweils denselben Bildpunkten der durch die verschiedenen Kameras (4.1, 4.2, 4.3, 4.4) aufgenommenen Bilder Korrespondenzen gefunden werden, und
• für jeden Bildpunkt gefundene Korrespondenzen der flächigen Kodierung und der zeitlichen Kodierung korreliert werden und diese Korrelationen bei der Vermessung des Objekts (2) verwendet werden,
**dadurch gekennzeichnet, dass** die Szene mit den mindestens drei Kameras (4.1, 4.2, 4.3, 4.4) aus verschiedenen Blickwinkeln (6.1, 6.2, 6.3, 6.4) aufgenommen wird und dass aus den mehreren Kameras (4.1, 4.2, 4.3, 4.4) jeweils Teilsysteme aus zwei Kameras (4.1, 4.2, 4.3, 4.4) gebildet werden und eine Rekalibrierung von Kameras (4.1, 4.2, 4.3, 4.4) durchgeführt wird, indem zur Kalibrierung eines Teilsystems immer die Messwerte der anderen Teilsysteme benutzt werden.

2. Verfahren nach Anspruch 1, **dadurch gekennzeichnet, dass** das zeitlich kodierte Muster durch räumliche Verschiebung desselben flächig kodierten Musters (3) erzeugt wird.

3. Verfahren nach Anspruch 2, **dadurch gekennzeichnet, dass** die räumliche Verschiebung des Musters (3) und die Aufnahme der Szene durch die zeitgleich getriggerten Kameras (4.1, 4.2, 4.3, 4.4) nicht aufeinander abgestimmt sind.

4. Verfahren nach Anspruch 2 oder 3, **dadurch gekennzeichnet, dass** die Größe der räumlichen Verschiebung des Musters (3) zwischen den nacheinander aufgenommenen Szenen unterschiedlich ist.

5. Verfahren nach einem der Ansprüche 2 bis 4, **dadurch gekennzeichnet, dass** die Größe mindestens einer der räumlichen Verschiebungen kleiner ist als ein Musterpunkt (8) des flächigen Musters (3).

6. Verfahren nach einem der vorhergehenden Ansprüche, **dadurch gekennzeichnet, dass** das zeitlich kodierte Muster durch phasenversetzte Projektion einer Helligkeitsverteilung erzeugt wird.

7. Verfahren nach einem der vorhergehenden Ansprüche, **dadurch gekennzeichnet, dass** das zeitlich kodierte Muster durch zeitlich versetzte Projektion verschiedener Muster (3) erzeugt wird.

8. Verfahren nach einem der vorhergehenden Ansprüche, **dadurch gekennzeichnet, dass** für einen Bildpunkt (8) eine Korrelation von Informationen aller Kameras (4.1, 4.2, 4.3, 4.4) durchgeführt wird.

9. Verfahren nach einem der vorhergehenden Ansprüche, **dadurch gekennzeichnet, dass** die Szene mit vier Kameras (4.1, 4.2, 4.3, 4.4) aus verschiedenen Blickwinkeln (6.1, 6.2, 6.3, 6.4) aufgenommen wird.

10. Verfahren nach einem der vorhergehenden Ansprüche, **dadurch gekennzeichnet, dass** die Bilder einzelner der Kameras (4.1, 4.2, 4.3, 4.4) mittels zweidimensionaler Bildanalyse zur Kantenerkennung ausgewertet werden und dass eine in einem Bild erkannte Kante in eine dreidimensionale Punktewolke projiziert wird, die ein Ergebnis der dreidimensionalen Vermessung des Objekts (2) darstellt.

11. Verfahren nach Anspruch 10, **dadurch gekennzeichnet, dass** für die zweidimensionale Bildanalyse die Szene zusätzlich ohne Projektion eines Musters mit den Kameras (4.1, 4.2, 4.3, 4.4) aufgenommen wird.

12. System zur Vermessung eines Objekts (2) mittels Stereoskopie mit einem Projektor (9) zur Projektion (7) eines kodierten Musters (3) auf die Objektoberfläche, mit Kameras (4.1, 4.2, 4.3, 4.4) zur Aufnahme des als Szene bezeichneten auf die Objektoberfläche projizierten Musters (3) und mit einer Recheneinheit (5), die durch ein Programm zur Bildverarbeitung dazu eingerichtet ist, in den durch die Kameras (4.1, 4.2, 4.3, 4.4) aufgenommenen Bildern Korrespondenzen der Szene aufzufinden und mittels der gefundenen Korrespondenzen eine Vermessung des Objekts (2) durchzuführen, wobei die Kameras (4.1, 4.2, 4.3, 4.4) intrinsisch und extrinsisch kalibriert sind, **dadurch gekennzeichnet, dass** mindestens drei Kameras (4.1, 4.2, 4.3, 4.4) vorgesehen und derart angeordnet sind, dass die Szene aus mindestens drei verschiedenen Blickwinkeln (6.1, 6.2, 6.3, 6.4) aufgenommen wird und dass das System dazu eingerichtet ist, das Verfahren nach einem der Ansprüche 1 bis 11 durchzuführen.

13. System nach Anspruch 12, **dadurch gekennzeichnet, dass** mindestens vier Kameras (4.1, 4.2, 4.3, 4.4) vorgesehen und derart angeordnet sind, dass die Szene aus mindestens vier verschiedenen Blickwinkeln (6.1, 6.2, 6.3, 6.4) aufgenommen wird.

## Claims

1. A method for measuring an object (2) by means of stereoscopy, in which a pattern (3) is projected onto the object surface by means of a projector (9) and the pattern (3), which is designated as a scene and is projected onto the object surface, is captured by at least three intrinsically and extrinsically calibrated cameras (4.1, 4.2, 4.3, 4.4), wherein correspondences of the scene are found in the images captured using the cameras (4.1, 4.2, 4.3, 4.4) by means of a computing unit (5) using image processing, and a measurement of the object (2) is carried out by means of the correspondences found, wherein a two-dimensional and temporal coding is generated during the pattern projection, by
• projecting a completely two-dimensionally coded pattern (3) and capturing the scene using the cameras (4.1, 4.2, 4.3, 4.4), and
• projecting a temporally coded pattern having a two-dimensionally different coding multiple times in succession and capturing multiple scenes in succession using the cameras (4.1, 4.2, 4.3, 4.4), in a manner triggered simultaneously in each case,
wherein
• during the two-dimensional coding for the scene, correspondences of adjacent pixels are found in the images captured by the different cameras (4.1, 4.2, 4.3, 4.4),
• during the temporal coding for the multiple scenes, correspondences are found in the same pixels of the images captured by the different cameras (4.1, 4.2, 4.3, 4.4), and
• for each pixel, found correspondences of the two-dimensional coding and of the temporal coding are correlated, and these correlations are used in the measurement of the object (2),
**characterised in that** the scene is captured using the at least three cameras (4.1, 4.2, 4.3, 4.4) from different viewing angles (6.1, 6.2, 6.3, 6.4) and that sub-systems of two cameras (4.1, 4.2, 4.3, 4.4) are formed from the multiple cameras (4.1, 4.2, 4.3, 4.4), and a recalibration of cameras (4.1, 4.2, 4.3, 4.4) is carried out by always using the measured values of the other sub-systems to calibrate one sub-system.

2. The method according to Claim 1, **characterised in that** the temporally coded pattern is generated by spatial displacement of the same two-dimensionally coded pattern (3).

3. The method according to Claim 2, **characterised in that** the spatial displacement of the pattern (3) and the capturing of the scene by the simultaneously triggered cameras (4.1, 4.2, 4.3, 4.4) are not coordinated with one another.

4. The method according to Claim 2 or 3, **characterised in that** the magnitude of the spatial displacement of the pattern (3) is different between the successively captured scenes.

5. The method according to any one of Claims 2 to 4, **characterised in that** the magnitude of at least one of the spatial displacements is smaller than a pattern point (8) of the two-dimensional pattern (3).

6. The method according to any one of the preceding claims, **characterised in that** the temporally coded pattern is generated by phase-shifted projection of a brightness distribution.

7. The method according to any one of the preceding claims, **characterised in that** the temporally coded pattern is generated by time-shifted projection of different patterns (3).

8. The method according to any one of the preceding claims, **characterised in that** a correlation of information from all the cameras (4.1, 4.2, 4.3, 4.4) is carried out for one pixel (8).

9. The method according to any one of the preceding claims, **characterised in that** the scene is captured using four cameras (4.1, 4.2, 4.3, 4.4) from different viewing angles (6.1, 6.2, 6.3, 6.4).

10. The method according to any one of the preceding claims, **characterised in that** the images of individual cameras (4.1, 4.2, 4.3, 4.4) are evaluated by means of two-dimensional image analysis to detect edges, and that an edge detected in an image is projected into a three-dimensional point cloud which represents a result of the three-dimensional measurement of the object (2).

11. The method according to Claim 10, **characterised in that** for the two-dimensional image analysis, the scene is additionally captured using the cameras (4.1, 4.2, 4.3, 4.4) without projection of a pattern.

12. A system for measuring an object (2) by means of stereoscopy having a projector (9) for projecting (7) a coded pattern (3) onto the object surface, having cameras (4.1, 4.2, 4.3, 4.4) for capturing the pattern (3), which is designated as a scene and projected onto the object surface, and having a computing unit (5), which is configured by means of a program for image processing to find correspondences of the scene in the images captured by the cameras (4.1, 4.2, 4.3, 4.4) and to carry out a measurement of the object (2) by means of the correspondences found, wherein the cameras (4.1, 4.2, 4.3, 4.4) are intrinsically and extrinsically calibrated, **characterised in that** at least three cameras (4.1, 4.2, 4.3, 4.4) are provided and arranged such that the scene is captured from at least three different viewing angles (6.1, 6.2, 6.3, 6.4), and that the system is configured to carry out the method according to any one of Claims 1 to 11.

13. The system according to Claim 12, **characterised in that** at least four cameras (4.1, 4.2, 4.3, 4.4) are provided and arranged such that the scene is captured from at least four different viewing angles (6.1, 6.2, 6.3, 6.4) .

## Revendications

1. Procédé de mesure d'un objet (2) au moyen de la stéréoscopie, dans lequel un motif (3) est projeté sur la surface de l'objet au moyen d'un projecteur (9) et le motif (3) projeté sur la surface de l'objet, appelée scène, est enregistré avec au moins trois caméras calibrées intrinsèquement et extrinsèquement(4.1, 4.2, 4.3, 4.4), dans lequel des correspondances de la scène sont trouvées au moyen d'une unité de calculateur (5) par traitement d'image dans les images enregistrées par les caméras (4.1, 4.2, 4.3, 4.4) et une mesure de l'objet (2) est effectuée au moyen des correspondances trouvées, dans lequel un codage bidimensionnel et temporel est généré lors de la projection du motif par codage spatial et temporel, en ce que
• un motif entièrement codé spatialement (3) est projeté et la scène est enregistrée avec les caméras (4.1, 4.2, 4.3, 4.4), et
• un motif codé temporellement avec un codage différent à l'échelle de la zone est projeté plusieurs fois de suite et plusieurs scènes sont enregistrées les unes après les autres avec les caméras (4.1, 4.2, 4.3, 4.4) enregistrées simultanément déclenchées,
dans lequel
• des correspondances de pixels voisins dans les images enregistrées par les différentes caméras (4.1, 4.2, 4.3, 4.4) sont trouvées dans le cadre du codage spatial de la scène,
• des correspondances sont trouvées dans le cadre du codage temporel pour les plusieurs scènes dans les mêmes pixels des images enregistrées par les différentes caméras (4.1, 4.2, 4.3, 4.4), et
• des correspondances du codage spatial et du codage temporel trouvées pour chacune pixel sont corrélés et ces corrélations sont utilisés lors de la mesure de l'objet (2),
**caractérisé en ce que** la scène est enregistrée avec les au moins trois caméras (4.1, 4.2, 4.3, 4.4) à partir de différentes perspectives (6.1, 6.2, 6.3, 6.4) et chaque sous-système de deux caméras (4.1, 4.2, 4.3, 4.4) est formé à partir des multiples caméras (4.1, 4.2, 4.3, 4.4) et des caméras (4.1 , 4.2, 4.3, 4.4) sont recalibrées en utilisant toujours les valeurs mesurées des autres sous-systèmes pour calibrer un sous-système.

2. Procédé selon la revendication 1, **caractérisé en ce que** le motif codé temporellement est généré par déplacement spatial du même motif codé spatialement (3) .

3. Procédé selon la revendication 2, **caractérisé en ce que** le déplacement spatial du motif (3) et l'enregistrement de la scène par les caméras (4.1, 4.2, 4.3, 4.4) qui se déclenchent simultanément ne sont pas coordonnés l'un avec l'autre.

4. Procédé selon la revendication 2 ou 3, **caractérisé en ce que** la taille du déplacement spatial du motif (3) diffère entre les scènes enregistrées les unes après les autres.

5. Procédé selon une quelconque des revendications 2 à 4, **caractérisé en ce que** la taille d'au moins un des déplacements spatiaux est inférieure à un point du motif (8) du motif plan (3).

6. Procédé selon une quelconque des revendications précédentes, **caractérisé en ce que** le motif codé temporellement est généré par projection déphasée d'une distribution de luminosité.

7. Procédé selon une des revendications précédentes, **caractérisé en ce que** le motif codé temporellement est généré en projetant différents motifs (3) décalés dans le temps.

8. Procédé selon une quelconque des revendications précédentes, **caractérisé en ce que** pour un pixel (8) une corrélation des informations de toutes les caméras (4.1, 4.2, 4.3, 4.4) est effectuée.

9. Procédé selon une quelconque des revendications précédentes, **caractérisé en ce que** la scène est enregistrée avec quatre caméras (4.1, 4.2, 4.3, 4.4) sous des angles différents (6.1, 6.2, 6.3, 6.4).

10. Procédé selon une quelconque des revendications précédentes, **caractérisé en ce que** les images des caméras individuelles (4.1, 4.2, 4.3, 4.4) sont évaluées au moyen d'une analyse d'image bidimensionnelle pour la détection de bord et qu'un bord détecté dans une image est projeté dans un nuage de points tridimensionnel, qui représente un résultat de la mesure tridimensionnelle de l'objet (2).

11. Procédé selon la revendication 10, **caractérisé en ce que** pour l'analyse d'image bidimensionnelle, la scène est en outre enregistrée avec les caméras (4.1, 4.2, 4.3, 4.4) sans projeter de motif.

12. Système de mesure d'un objet (2) par stéréoscopie avec un projecteur (9) pour projeter (7) un motif codé (3) sur la surface de l'objet avec des caméras (4.1, 4.2, 4.3, 4.4) pour enregistrer le motif (3) projeté sur la surface de l'objet en tant que scène et avec une unité de calculateur (5), qui est configurée par un programme de traitement d'images pour trouver des correspondances de la scène dans les images enregistrées par les caméras (4.1, 4.2, 4.3, 4.4) et pour effectuer une mesure de l'objet (2)au moyen des correspondances trouvées, dans lequel les caméras (4.1, 4.2, 4.3, 4.4) sont calibrées intrinsèquement et extrinsèquement, **caractérisé en ce qu'**il est prévu au moins trois caméras (4.1, 42, 4.3, 4.4) , qui sont disposées de telle sorte que la scène soit enregistrée sous au moins trois angles différents (6.1, 6.2, 6.3, 6.4) et que le système soit agencé pour mettre en œuvre le procédé selon une quelconque des revendications 1 à 11.

13. Système selon la revendication 12, **caractérisé en ce qu'**au moins quatre caméras (4.1, 4.2, 4.3, 4.4) sont prévues et agencées de manière à ce que la scène soit enregistrée à partir d'au moins quatre perspectives différentes (6.1, 6.2, 6.3, 6.4).
